# EUROPÄISCHE PATENTSCHRIFT

(11) **EP 2 026 540 B1**
(45) Veröffentlichungstag und Bekanntmachung des Hinweises auf die Patenterteilung: **02.12.2015**
(21) Anmeldenummer: 08009296.8
(22) Anmeldetag: 20.05.2008
(51) Int. Cl.: H04L 29/12, H04L 29/06, H04L 29/08

(54) **Verfahren und System zum Verfügbarmachen von Daten über ein Webportal**
Method and system for making data available through a web portal
Procédé et système de mise à disposition de données à l'aide d'un portail Web

(30) Priorität: 21.05.2007 DE 102007023843
(43) Veröffentlichungstag der Anmeldung: 18.02.2009
(73) Patentinhaber: Vodafone Holding GmbH, 40213 Düsseldorf (DE)
(72) Erfinder: Brücklmeier, Ralf, 40468 Düsseldorf (DE); Rodrigues, Bruno, 40219 Düsseldorf (DE)
(74) Vertreter: Jostarndt, Hans-Dieter

(56) Entgegenhaltungen:
- WO-A1-2007/031708
- US-A1- 2005 102 381

## Beschreibung

### Technisches Gebiet

Die Erfindung betrifft ein Verfahren zum Zugänglichmachen von Nutzdaten über ein in einem IP-Netzwerk zugängliches, durch einen Portalserver bereitgestelltes Netzwerkportal mittels eines mit einem Telefonnetzwerk verbundenen Endgeräts eines Teilnehmers.

### Hintergrund der Erfindung

Es sind Internatportale bekannt, die es Nutzern ermöglichen, Daten auf einer Internet-Webseite zugänglich zu machen. Diese Daten können von anderen Nutzern des Internetportals eingesehen bzw. abgerufen werden. Bei den Daten kann es sich beispielweise um Videodaten oder Bilder handeln. Beispiele für derartige Internetportale sind die Internet-Webseiten http://www.youtube.com und http://www.flickr.com. Gleichfalls ist es auch bekannt, Textnachrichten in so genannten Chatrooms oder Newsgroups zugänglich zu machen, die von Besuchern des Chatrooms oder der Newsgroup eingesehen bzw. abgerufen werden können.

Über die zuvor beschriebenen Internetportale werden in der Regel Daten einer Vielzahl von Nutzern weiteren Nutzern zugänglich gemacht. Darüber hinaus sind auch Webseiten bekannt, über die ein einzelner Nutzer Daten weiteren Nutzern im Sinne eines Tagebuchs zugänglich machen kann. Derartige Webseiten werden als Weblogs oder kurz als Blogs bezeichnet und können ebenfalls Bestandteil eines Internetportals sein, welches von dem Nutzer bereitgestellte Daten auf der dem Nutzer zugeordneten Webseite zugänglich macht.

Die zuvor beschriebenen Internetportale werden im Folgenden als Gemeinschaftsportale bezeichnet. Üblicherweise werden Daten von einem mit dem Internet verbundenen Rechner an ein Gemeinschaftsportal übermittelt und über das Gemeinschaftsportal auf der entsprechenden Webseite zugänglich gemacht. Möchte der Nutzer Daten von einem Kommunikationsendgerät, wie z.B. mit einem Fotohandy aufgenommene Bilder oder Videos, an ein Gemeinschaftsportal übermitteln, muss er die Daten in der Regel erst auf einen mit dem Internet verbundenen Rechner übertragen. Dies ist für den Benutzer mit einem relativ hohen Aufwand verbunden.

Die US 2005/0102381 A1 beschreibt ein System, in dem Nutzer Inhalte, insbesondere Fotos, von einem mobilen Endgerät zu einem Server hochladen können. Zur Prüfung der Zugriffsberechtigung werden die Rufnummern der mobilen Endgeräte herangezogen, wobei die Rufnummern zugriffsberechtigter Endgeräte jeweils in Nutzerkonten hinterlegt sind. Aus der WO 2007/031708 geht ein System hervor, in dem Nutzer Inhalte über einen entsprechenden Server einer Gruppe von Empfängern zugänglich machen können. Zu dem Server werden die Inhalte von mobilen Endgeräten der Nutzer gesendet.

### Darstellung der Erfindung

Es ist eine Aufgabe der vorliegenden Erfindung zu ermöglichen, dass Daten von einem mit einem Telefonnetz verbundenen Kommunikationsendgerät in möglichst einfacher Weise über ein Gemeinschaftsportal zugänglich gemacht werden können.

Erfindungsgemäß wird diese Aufgabe durch ein Verfahren mit den Merkmalen des Patentanspruchs 1 gelöst. Erfindungsgemäß wird die Aufgabe ferner gelöst durch ein System mit den Merkmalen des Patentanspruchs 13. Weiterbildungen der Erfindung sind Gegenstand der Ansprüche 2 bis 12.

Die Erfindung beinhaltet ein Verfahren zum Zugänglichmachen von Nutzdaten über ein in einem IP-Netzwerk zugängliches, durch einen Portalserver bereitgestelltes Netzwerkportal mittels eines mit einem Telefonnetzwerk verbundenen Endgeräts eines Teilnehmers, bei dem
- eine Zuordnung zwischen einer Rufnummer und Zugangsdaten für einen Zugriff auf den Portalserver erzeugt wird,
- unter Verwendung der Rufnummer eine Kommunikationsverbindung von dem Endgerät zu einem innerhalb des IP-Netzwerks mit dem Porkalserver verbundenen Zugriffsserver hergestellt wird, und
- im Rahmen der Kommunikationsverbindung an den Zugriffsserver übertragene Nutzdaten unter Verwendung der der Rufnummer zugeordneten Zugangsdaten von dem Zugriffsserver an den Portalserver übergeben werden.

Eine Weiterbildung der Erfindung zeichnet sich dadurch aus, dass den Zugangsdaten zusätzlich eine das Endgerät identifizierende Teilnehmemummer zugeordnet wird, wobei der Zugriffsserver die verwendeten Zugangsdaten unter Heranziehung der Teilnehmemummer ermittelt.

Eine Weiterbildung der Erfindung zeichnet sich dadurch aus, dass die Zugangsdaten eine dem Teilnehmer innerhalb des Portalservers zugeordnete Nutzerkennung und ein Authentifizierungsmerkmal des Teilnehmers umfassen.

Eine Weiterbildung der Erfindung zeichnet sich dadurch aus, dass der Rufnummer und/oder der Teilnehmemummer wenigstens ein Steuerungsparameter zum Beeinflussen des Zugänglichmachens der Nutzdaten zugeordnet sind, die von dem Zugriffsserver an den Portalserver übergeben werden.

Eine Weiterbildung der Erfindung zeichnet sich dadurch aus, dass die Nutzdaten vorgegebenen Nutzern des Portals zugänglich gemacht werden, wobei die Nutzer anhand des Steuerparameters zugänglich gemacht werden.

Eine Weiterbildung der Erfindung zeichnet sich dadurch aus, dass die Nutzdaten ausgewählt sind aus der Gruppe umfassend Textdaten, Bilddaten, Audiodaten, und Videodaten.

Eine Weiterbildung der Erfindung zeichnet sich dadurch aus, dass Audio-und/oder Videodaten anhand eines im Rahmen der Kommunikationsverbindung aufgebauten Sprach- oder Videoanrufs an den Zugriffsserver übermittelt werden.

Eine Weiterbildung der Erfindung zeichnet sich dadurch aus, dass die Audiound/oder Videodaten vor der Übergabe an den Portalserver In dem Zugriffsserver aufgezeichnet werden.

Eine Weiterbildung der Erfindung zeichnet sich dadurch aus, dass im Rahmen der Kommunikationsverbindung eine die Nutzdaten enthaltende MMS- oder SMS-Nachricht an den Server übermittelt wird.

Eine Weiterbildung der Erfindung zeichnet sich dadurch aus, dass die Nutzdaten von dem Portalserver an wenigstens einen Nutzer des Portals übermittelt werden oder wenigstens einem Nutzer des Portals auf einer von dem Portalserver bereitgestellten Webseite zugänglich gemacht werden.

Eine Weiterbildung der Erfindung zeichnet sich dadurch aus, dass eine Zuordnung zwischen der Rufnummer und einer Bezeichnung des Portals erzeugt und an das Endgerät des Teilnehmers übermittelt wird.

Eine Weiterbildung der Erfindung zeichnet sich dadurch aus, dass aufgrund des Empfangs der Zuordnung in dem Endgerät ein die Bezeichnung und die Rufnummer enthaltender Eintrag in einem Adressbuch des Endgeräts erzeugt wird, wobei aufgrund der Auswahl der Bezeichnung innerhalb des Adressbuchs unter Verwendung der Rufnummer die Kommunikationsverbindung von dem Endgerät zu dem Zugriffsserver hergestellt wird.

Die Erfindung beinhaltet ferner ein System zum Zugänglichmachen von Nutzdaten über ein in einem IP-Netzwerk zugängliches, durch einen Portalserver bereitgestelltes Netzwerkportal mittels eines mit einem Telefonnetzwerk verbundenen Endgeräts eines Teilnehmers, umfassend eine Datenbank, in der Zuordnung zwischen einer Rufnummer und Zugangsdaten für einen Zugriff auf den Portalserver gespeichert ist, und einen mit dem Portalserver und der Datenbank verbundenen Zugriffsserver, wobei unter Verwendung der Rufnummer eine Kommunikationsverbindung von dem Endgerät zu dem Zugriffsserver herstellbar ist, und wobei der Zugriffsserver dazu ausgebildet ist, im Rahmen der Kommunikationsverbindung an den Zugriffsserver übertragene Nutzdaten unter Verwendung der der Rufnummer zugeordneten Zugangsdaten von dem Zugriffsserver an den Portalserver zu übergeben.

Die zuvor genannten und weitere Vorteile, Besonderheiten und zweckmäßige Ausgestaltungen der Erfindung werden auch anhand der Ausführungsbeispiele der Erfindung deutlich, die im Folgenden unter Bezugnahme auf die einzige Figur beschrieben werden.

### Kurze Beschreibung der Figur

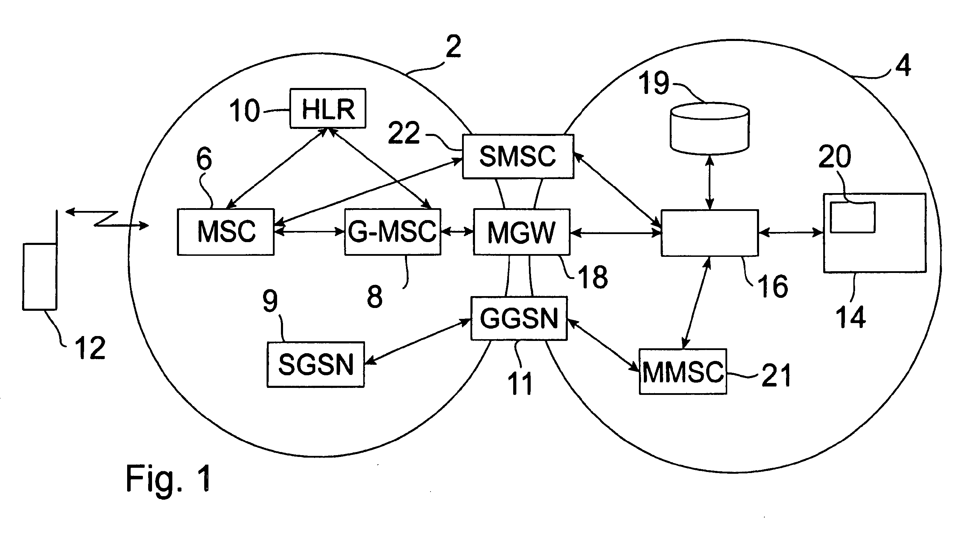

Fig. 1 zeigt eine schematische Darstellung eines Netzwerksystems, das ein leitungsvermittelndes Mobilfunknetzwerk und ein IP-Netzwerk umfasst.

### Ausführliche Beschreibung von Ausführungsbeispielen .

Figur 1 zeigt ausgewählte Elemente eines Netzwerksystems, welches ein Mobilfunknetzwerk 2 und ein auf dem Internetprotokoll (IP) basierendes IP-Netzwerk 4 umfasst. Das Mobilfunknetzwerk 2 verfügt beispielsweise über einen leitungsvermittelnden (Circuit Switched (CS)) Teil, der beispielsweise als CS-Domäne eines Mobilfunknetzwerks nach dem UMTS-Standard (UMTS: Universal Mobile Telecommunications System) oder als ein Mobilfunknetzwerk nach dem GSM-Standard (GSM: Global System for Mobile Communications) ausgestaltet und dem Fachmann an sich bekannte Netzwerkelemente umfasst. insbesondere weist der leitungsvermittelnde Teil des Mobilfunknetzwerks 2 mehrere Mobilfunkvermittlungsstellen (MSCs) 6, 8 zur Vermittlung von Kommunikationsverbindungen auf, von denen in Figur 1 beispielhaft zwei dargestellt sind. Eine der dargestellten MSCs 6, 8 ist als eine Gateway-MSC 8 (G-MSC) ausgestaltet und ermöglicht eine Verbindung zwischen dem Mobilfunknetzwerk 2 und dem IP-Netzwerk 4. Darüber hinaus umfasst das Mobilfunknetzwerk 2 ein Short Message Service Center (SMSC) 22 zur Übermittlung von Kurznachrichten im Rahmen des Short Message Service (SMS). Das SMSC 22 verfügt dabei auch über eine Anbindung an das IP-Netzwerk 4

Die MSCs 6, 8 sowie das SMSC 22 können mit einem Heimatregister (HLR) 10 kommunizieren, in dem teilnehmerspezifische Daten von Mobilfunkteilnehmern gespeichert sind. Insbesondere enthält das Heimatregister Routing-Informationen, anhand derer Anforderungen für den Aufbau einer Kommunikationsverbindung zu einem mit dem Mobilfunknetzwerk 2 verbundenen Endgerät weitergeleitet werden können. Diese Routing-Informationen umfassen beispielsweise eine Angabe der Mobilvermittlungsstelle, in deren Abdeckungsgebiet sich das Endgerät befindet. Bei den innerhalb des leitungsvermittelnden Teils des Mobilfunknetzuverks nutzbaren Kommunikationsdiensten kann es sich beispielsweise um Dienste für Sprach- und/oder Videoanrufe, oder den schon erwähnten Kurznachrichtendienst (SMS) für den Austausch von Kurznachrichten handeln.

Ferner umfasst das Mobilfunknetzwerk 2 einen paketvermittelnden (Packet Switched (PS)) Teil, der beispielsweise einen so genannten Serving GPRS Support Node (SGSN) 9 umfasst, der mit dem Heimatregister 10 kommunizieren kann, sowie einen so genannten Gateway GPRS Support Node (GGSN) 11, über den der paketvermittelnde Teil des Mobilfunknetzwerks 2 mit dem IP-Netzwerk 4 verbunden ist. Innerhalb des paketvermittelnden Teils nutzbare Kommunikationsdienste umfassen einen Multimedia Message Service (MMS) zur Übertragung von MMS-Nachrichten, die Text-, Bild- und/oder Videodaten umfassen können. Zur Durchführung des MMS ist der GGSN 11 mit einem innerhalb des IP-Netzwerks 4 befindlichen Multimedia Message Service Center (MMSC) 21 verbunden, welches die Weiterleitung von MMS-Nachrichten vornimmt.

Endgeräte von Mobilfunkteilnehmern, von denen in Figur 1 beispielhaft ein Endgerät 12 dargestellt ist, sind über ein in Figur 1 nicht dargestelltes Radionetzwerk mit dem Mobilfunknetzwerk verbunden. Zur Eingabe und Wiedergabe von Daten weist das Endgerät 12 eine oder mehrere Eingabeeinrichtungen und Wiedergabeeinrichtungen auf. Die Eingabeeinrichtungen können beispielsweise eine Tastatur, ein Mikrofon und optional eine Videokamera umfassen, und bei den Wiedergabeeinrichtungen kann es sich beispielsweise um einen Lautsprecher und/oder eine als Display ausgestaltete Anzeigeeinrichtung handeln. Ferner verfügt das Endgerät 12 über einen Prozessor, der mit einem Speicher verbunden ist, und zur Steuerung des Endgeräts 12 sowie zur Ausführung von in dem Speicher gespeicherten Applikationen genutzt wird. Bei den Applikationen kann es sich beispielsweise um Java-Applikationen handeln, die mittels einer ebenfalls in dem Endgerät 12 verfügbaren Programmausführungsumgebung ausgeführt werden können. Insbesondere ist in dem Endgerät 12 ein Adressbuch gespeichert, in dem Zuordnungen zwischen Rufnummern (Mobile Subscriber ISDN Numbers (MSISDNs)) und Bezeichnungen von Kommunikationspartnern hinterlegt sind.

Das IP-Netzwerk 4 umfasst einen Server 14 der ein Portal einer so genannten Online-Community bereitstellt und im Folgenden als Portalserver 14 bezeichnet wird. Dabei können von dem Portalserver 14 beispielsweise Webseiten bereitgestellt werden, auf denen Nutzer Beiträge publizieren können, welche Text-, Audio-, Bild- und/oder Videodaten umfassen können. Auf die Webseiten kann in einer Ausführungsform uneingeschränkt von weiteren Nutzern mittels eines mit dem IP-Netzwerk 4 verbundenen Endgeräts zugegriffen werden, um die Beiträge einzusehen. Ferner kann es vorgesehen sein, für einen Beitrag die Nutzer zu bestimmen, die für einen Zugriff auf den Beitrag berechtigt sind. Beispiele für derartige Plattformen sind etwa die Webseiten http://www.youtube.com, die Nutzern die Publikation von Videodaten ermöglicht, und http://www.flickr.com, die Nutzern die Publikation von Bilddaten erlaubt. Weitere Beispiele für derartige Webseiten sind so genannte Weblogs oder Blogs über die ein Nutzer Daten für einen Zugriff durch weitere Nutzer publizieren kann: In einer weiteren Ausführungsform kann es sich bei dem Portal um einen so genannten Chatraum handeln, bei dem Nachrichten, die von einem Nutzer an den Portalserver 14 gesendet werden, an die weiteren Mitglieder des Chatraums weitergeleitet werden. Dies geschieht beispielsweise ebenfalls über eine Webseite, auf welche die Mitglieder des Chatraums zugreifen oder durch eine Übermittelung von Nachrichten eines geeigneten Formats an die mit dem IP-Netzwerk 4 verbundenen Mitglieder des Chatraums.

Neben den zuvor beschriebenen Funktionen stellt dem Portalsarver 14 zudem eine schematisch unter dem Bezugszeichen 20 veranschaulichte Hilfsanwendung bereit, die es Nutzern erlaubt, Beiträge an den Portalserver 14 zu übertragen. Die Hilfsanwendung 20 ist insbesondere dazu ausgebildet, die zu publizierenden Daten zu empfangen und kann beispielsweise Formatänderungen der Daten vornehmen, so dass diese von dem Format, in dem sie durch den Nutzer bereitgestellt werden, in das Format konvertiert werden können, in dem sie publiziert werden sollen. Zusätzlich zu den zu publizierenden Daten, die im Folgenden als Nutzdaten bezeichnet werden, können der Hilfsanwendung 20 auch Parameter übergeben werden, mit denen beispielsweise festgelegt wird, in welcher Weise die Nutzdaten publiziert werden sollen. Insbesondere können die Parameter etwa die Angaben der weiteren Nutzer umfassen, die für einen Zugriff auf die Nutzdaten berechtigt sind bzw. denen die Nutzdaten übermittelt werden sollen. Die Angaben können dabei beispielsweise die Nutzernamen umfassen, die diesen Nutzern innerhalb des Portalservers 14 zugeordnet sind, oder die Angabe einer zuvor festgelegten Gruppe von Nutzern, die zuvor von dem Nutzer innerhalb eines dem Nutzer zugeordneten Zugangsprofils festgelegt worden sind, das innerhalb des Portalservers gespeichert ist. Ein Zugriff auf die Hilfsanwendung 20 wird üblicherweise nur registrierten Nutzern gewährt, die über ein in dem Portalserver 14 gespeichertes Zugangsprofil verfügen. In einem Zugangsprofil sind dabei auch Zugangsdaten der registrierten Nutzer für den Zugriff auf den Portalserver 14 bzw. die Hilfsanwendung 20 gespeichert, die in der Regel eine Nutzerkennung zur Identifizierung des Nutzers und ein Authentifizierungsmerkmal zur Authentifizierung des Nutzers umfassen. Bei dem Authentifizierungsmerkmal kann es sich beispielsweise um ein dem Nutzer zugeordnetes Kennwort handeln.

Zur Eingabe der Zugangsdaten, der zu publizierenden Daten und der Parameter stehen dem Portalserver 14 vorzugsweise mehrere Schnittstellen zur Verfügung. Eine erste Schnittstelle ist dabei als Webseite ausgebildet, über die Nutzer mittels eines mit dem IP-Netzwerk 4 verbundenen Endgeräts zugreifen können. Die Webseite umfasst beispielsweise Formularfelder für die Eingabe der Zugangsdaten und Parameter und ermöglicht es, die zu publizierenden Daten von dem Endgerät an den Portalserver 14 zu übertragen. Eine weitere Schnittstelle ermöglicht es, die Zugangsdaten und Parameter sowie die zu publizierenden Nutzdaten im Rahmen eines vorgegebenen Übertragungsprotokolls von einem weiteren mit dem IP-Netzwerk 4 verbundenen Server 16 an den Portalserver 14 zu übertragen, wobei der weitere Server 16 im Folgenden als Zugriffsserver bezeichnet wird.

Die Hilfsanwendung 20 bzw. die vorgesehene Schnittstelle kann von dem Zugriffsserver 16 anhand einer Netzwerkadresse des Portalservers 14 sowie einer so genannten Portadresse angesprochen werden. Anhand der Netzwerkadresse wird der Portalserver innerhalb des IP-Netzwerks 4 identifiziert und an den Portalserver 14 adressierte Datennachrichten innerhalb des IP-Netzwerks 4 an den Portalserver 14 weitergeleitet. Die Portadresse identifiziert einen von dem Portalserver 14 bereitgestellten Port, über den Datennachrichten innerhalb des Portalservers 14 an die Hilfsanwendung 20 weitergeleitet werden.

Der Zugriffsserver 16 ist innerhalb des IP-Netzwerks 4 mit einem Netzwerkknoten 18 verbunden, der seinerseits mit der innerhalb des Mobilfunknetzwerks 2 befindlichen Gateway-MSC 8 verbunden ist. Der Netzwerkknoten fungiert als Netzübergang zwischen dem Mobilfunknetzwerk 2 und dem IP-Netzwark 4 und wird auch als Media-Gateway (MGW) bezeichnet. Der Media-Gateway 18 wird von einer Media Gateway Control Funktion (MGCF) gesteuert und führt Umsetzungen zwischen den in dem Mobilfunknetzwerk 2 und in dem IP-Netzwerk 4 verwendeten Signalisierungs und Übertragungsprotokollen durch. Zur Signalisierung wird innerhalb des Mobilfunknetzwerks 2 beispielsweise das Signalling System No. 7 (SS7) und insbesondere das ISDN User Part (ISUP) Protokoll verwendet und innerhalb des IP-Netzwarks 4 das Session Initiation Protocol (SIP). Der Media-Gateway 18 ist daher insbesondere dazu ausgebildet, von der Gateway-MSC 8 an den Zugriffsserver 16 gesendete ISUP-Nachrichten in entsprechende SIP-Nachrichten umzusetzen.

Ferner ist der Zugriffsserver 16 mit dem SMSC 22 und dem MMSC 21 verbunden, wodurch SMS- und MMS-Nachrichten in einer noch zu beschreibenden Weise an den Zugriffsserver 16 weitergeleitet werden können.

In dem Netzwerksystem wird es Mobilfunkteilnehmern ermöglicht, zu publizierende Nutzdaten im Rahmen der in dem Mobilfunknetzwerk 2 vorgesehenen Kommunikationsdienste von ihrem Endgerät 12 über den Zugriffsserver 16 an den Portalserver 14 zu übermitteln. Dies erfolgt im Rahmen einer Kommunikationsverbindung, die von dem Endgerät 12 zu dem Zugriffsserver 16 aufgebaut wird, wobei der Zugriffsserver die im Rahmen der Kommunikationsverbindung empfangenen Nutzdaten an die Hilfsanwendung 20 des Portalservers 14 weiterleitet. Zusätzlich werden von dem Zugriffsserver 16 Zugangsdaten an die Hilfsanwendung 20 übergeben, die dem Mobilfunknutzer innerhalb des Portalservers 14 zugeordnet sind, sowie zuvor von dem Mobilfunknutzer festgelegte Parameter, die festlegen, in welcher Weise die Nutzdaten mittels des Portalservers 16 publiziert werden sollen.

Hierzu wird für den Mobilfunkteilnehmer ein Verzeichnis innerhalb einer mit dem Zugriffsserver 16 verbundenen Zugriffsdatenbank angelegt, in dem die Zugangsdaten des Mobilfunkteilnehmers gespeichert werden, unter denen er in dem Portalserver 14 registriert ist. Hierbei handelt es sich beispielsweise um die Nutzerkennung und das Kennwort des Mobilfunkteilnehmers. Falls Nutzdaten durch den Portalserver 14 in einer besonderen Weise publiziert werden sollen, enthält das Verzeichnis zudem die entsprechenden Parameter, die hierfür von dem Zugriffsserver 16 an den Portalserver zu übergeben sind. Ferner umfasst das Verzeichnis die dem Mobilfunkteilnehmer bzw. seinem Endgerät 12 innerhalb des Mobilfunknetzwerks 2 zugeordnete MSISDN, die im Folgenden als Tellnehmernummer bezeichnet wird. Darüber hinaus wird dem Verzeichnis des Nutzers selbst eine innerhalb des Mobilfunknetzwerks 2 verwendbare MSISDN zugeordnet, die ebenfalls in dem Verzeichnis gespeichert sein kann. Die Zuordnung zwischen dem Verzeichnis und der MSISDN braucht dabei nicht eindeutig zu sein. Insbesondere können in der Zugriffsdatenbank mehrere Verzeichnisse der zuvor beschriebenen Art gespeichert sein, die jeweils einem Mobilfunkteilnehmer zugeordnet sind und denen dieselbe MSISDN zugeordnet ist.

Mittels des Endgeräts 12 des Mobilfunkteilnehmers kann unter Verwendung der dem Verzeichnis zugeordneten MSISDN im Rahmen eines in dem Mobilfunknetzwerk 2 vorgesehenen Kommunikationsdienstes eine Kommunikationsverbindung zur Übertragung von Nutzdaten an den Zugriffsserver 16 hergestellt werden. Dabei können sowohl Sprach- und/oder Videoanrufe aufgebaut werden als auch Daten über den SMS oder den MMS gesendet werden.

Ein Sprach- und/oder Videoanruf wird hierzu unter Verwendung der den Zugriffsdaten des Mobilfunkteilnehmers zugeordneten MSISDN aufgebaut. Dabei wird eine Anforderung für den Aufbau eines Sprach- und/oder Videoanrufs zunächst von dem Endgerät 12 an die Mobilvermittlungsstelle 6 gesendet, in deren Abdeckungsbereich sich das Endgerät 12 befindet. Von dieser Mobilvermittlungsstelle 6 wird die Anforderung über die Gateway-MSC 8 an den Media-Gateway 18 übermittelt, welcher die Anforderung an den Zugriffsserver 16 weiterleitet, In einer Ausführungsform umfassen die MSISDNs, die in der Zugriffsdatenbank 19 gespeicherten Zugriffsdaten zugeordnet sind, eine vorgegebene Ziffernfolge, anhand derer die Mobilvermittlungsstellen 6, 8 erkennen, dass die Anforderung an den Zugriffsserver weiterzuleiten ist. In einer weiteren Ausführungsform ist innerhalb des Heimatregisters 10 eine Routing-Information für die MSISDN angegeben, anhand derer die Anforderung an den Zugriffsserver 16 weitergeleitet wird. Die Anforderung enthält dabei vorzugsweise neben der den Zugriffsdaten zugeordneten MSISDN auch die Teilnehmernummer des Mobilfunkteilnehmers. Aufgrund des Empfang der Anforderung in dem Zugriffsserver 16 kann ein Sprach- und/oder Videoanrufs zwischen dem Endgerät 12 und dem Media-Gateway 18 über den leitungsvermittelnden Teil des Mobilfunknetzwerks 2 aufgebaut werden, welcher von dem Media-Gateway 18 unter Nutzung von IP-basierten Protokollen an den Zugriffsserver 16 weitergeleitet wird. Im Rahmen des Sprach- und/oder Videoanrufs können Sprach- oder Videodaten von dem Endgerät 12 an den Zugriffsserver 16 übertragen werden.

Ferner kann unter Verwendung der dem Verzeichnis zugeordneten MSISDN eine SMS-Nachricht von dem Endgerät 12 gesendet werden. Diese SMS-Nachricht wird in dem SMSC 22 empfangen. An der MSISDN erkennt der SMSC 22, dass der in der SMS-Nachricht enthaltene Text an den Zugriffsserver 16 zu übermitteln ist. Dabei wird ein IP-basiertes Protokolls verwendet, um den in der SMS-Nachricht enthaltenen Text und die ebenfalls in der SMS-Nachricht enthaltene Tellnehmernummer des Mobilfunktelinehmers innerhalb des IP-Netzwerks 4 an den Zugriffsserver 16 zu übermitteln. Beispiele für einsetzbare Protokolle sind das Universal Computer Protocol (UCP) und das auf dem Hypertext Transfer Protocol (HTTP) basierende Kannel-Protokoll.

Gleichfalls kann unter Verwendung der dem Verzeichnis zugeordnete MSISDN eine MMS-Nachricht gesendet werden. Hierfür baut das Endgerät 12 über den SGSN 9 und den GGSN 11 eine Verbindung zu dem MMSC 21 auf, über welche die MMS-Nachricht an das MMSC 21 gesendet wird. Anhand der MSISDN erkennt das MMSC 21, dass die MMS-Nachricht an den Zugriffsserver 16 zu übermitteln ist und leitet diese unter Angabe der Tellnehmernummer des Mobilfunkteilnehmers an den Zugriffsserver 16 weiter. Für die Weiterleitung kann beispielsweise das Simple Mail Transfer Protocol (SMTP) verwendet werden.

Beim Aufbau der Kommunikationsverbindung zu dem Zugriffsserver 16 wird, wie zuvor beschrieben, neben den Nutzdaten auch die dem Mobilfunkteilnehmer zugeordnete Teilnehmemummer übertragen. Anhand der Teilnehmernummer prüft der Zugriffsserver zunächst, ob dem Mobilfunkteilriehmer ein Verzeichnis innerhalb der Zugriffsdatenbank zugeordnet ist. Wenn ein dem Mobilfunkteilhahmer zugeordnetes Verzeichnis ermittelt wird, wird im Falle eines Sprach- oder Videoanrufs eine Kommunikationsverbindung zu dem mobilen Endgerät 12 aufgebaut. Nutzdaten die über diese Kommunikationsverbindung von dem mobilen Endgerät 12 an den Zugriffsserver 16 übertragen werden, werden im Bereich des Zugriffsservers 16 für eine spätere Weiterleitung an den Portalserver 14 in einem Speicher aufgezeichnet. Für die Aufzeichnung wird ein Datenformat verwendet, das von dem Portalserver 14 unterstützt wird, d.h. in dem Beiträge an den Portalserver 14 übermittelt werden können. In einer SMS-oder MMS-Nachricht enthaltene Nutzdaten werden gleichfalls zur späteren Weiterleitung an den Portalserver 14 innerhalb eines Speichers des Zugriffsservers 16 zwischengespeichert. In diesem Fall erfolgt die Speicherung der Nutzdaten ebenfalls in einem von dem Portalserver 14 unterstützten Datenformat.

Nach der Speicherung der empfangenen Nutzdaten wird von dem Zugriffsserver 16 eine Kommunikationsverbindung zu dem Portalserver 14 aufgebaut. Im Rahmen dieser Kommunikationsverbindung werden die Zugangsdaten und gegebenenfalls die Parameter, die innerhalb des dem Mobilfunkteilnehmer zugeordneten Verzeichnisses der Zugriffsdatenbank 19 gespeichert sind, an die Hilfsanwendung 20 übergeben. Ferner werden auch die zwischengespeicherten Nutzdaten an die Hilfsanwendung 20 übertragen.

Nach dem Empfang der Zugangsdaten ermittelt die Hilfsanwendung das in dem Portalserver 14 gespeicherte Zugangsprofil des Mobilfunkteilnehmers und prüft dabei, ob der Mobilfunkteilnehmer dazu berechtigt ist, zur Publikation von Nutzdaten auf den Portalserver 14 zuzugreifen. Wenn festgestellt wird, dass diese Zugangsberechtigung besteht, werden die von dem Zugriffsserver 16 an die Hilfsanwendung 20 übertragenen Nutzdaten sowie gegebenenfalls die Parameter innerhalb des Portalservers 14 weitergeleitet und mittels des Portalservers publiziert.

In einer beispielhaften Ausgestaltung können die Nutzdaten in der zuvor beschriebenen Weise beispielsweise auf einer von dem Portalserver 14 administrierten Webseite des Mobilfunkteilnehmers, insbesondere eines Blogs des Mobilfunkteilnehmers, publiziert werden. In der Regel können dabei innerhalb eines Blogs Text-, Bild-, Audio- und Videodaten publiziert werden. Somit können mittels einer SMS- oder MMS-Nachricht an den Zugriffsserver 16 gesendete Textdaten, die von dem Zugriffsserver 16 an den Portalserver 14 übergeben werden, von dem Portalserver 14 als Texteinträge in die Webseite eingebracht werden.

Werden mittels einer MMS-Nachricht Bilddaten an den Zugriffsserver 16 gesendet und von diesem an den Portalserver 14 übergeben, so wird von dem Portalserver 14 ein entsprechendes Bild in die Webseite eingebracht. Gleichfalls können mittels einer MMS-Nachricht Audio- und Videodaten an den Zugriffsserver 16 übertragen werden. Geschieht dies, werden die Audio- und/oder Videodaten in der zuvor beschriebenen Weise von dem Zugriffsserver 16 an den Portalserver 14 weitergeleitet und in Form eines so genannten Podcasts bzw. Videocasts auf der Webseite publiziert.

Ferner kann es sich bei dem Portal um ein Community-Portal handeln, welches die Publikation von Bilddaten oder Videodaten einer Vielzahl von Nutzern auf einer bzw. mehreren gemeinsamen Webseiten ermöglicht. Zur Publikation von Bilddaten innerhalb des Community-Portals sendet der Mobilfunktellnehmer in der zuvor beschriebenen Weise eine die Bilddaten enthaltende MMS-Nachricht an den Zugriffsserver 16, der die Bilddaten dann zur Publikation an den Portalserver 14 weiterleitet. Videodaten können gleichfalls mittels einer MMS-Nachricht an den Zugriffsserver 16 übermittelt werden.

Ferner ist eine Übermittelung von Videodaten im Rahmen eines Videoanrufs möglich. Die mittels einer MMS-Nachricht oder im Rahmen eines Videoanrufs an den Zugriffsserver 16 übertragenen Videodaten werden dann von dem Zugriffsserver 16 in der beschriebenen Weise zur Publikation an den Portalserver übermittelt. In dem Community-Portal kann es zudem vorgesehen sein, dass publizierte Bild- oder Videodaten nur bestimmten Nutzern zugänglich gemacht werden, die zuvor bestimmt worden sind. Die Angaben dieser Nutzer oder die Angabe der diese Nutzer umfassenden Nutzergruppe, die innerhalb des in dem Portalserver gespeicherten Zugangsprofils des Mobilfunkteilnehmers durch Angabe der von der Gruppe umfassten Nutzer definiert ist, können dabei als Parameter in dem Verzeichnis des Mobilfunkteilnehmers hinterlegt werden, welches in der Zugriffsdatenbank 19 gespeichert ist. Zusammen mit den Bild- oder Videodaten werden diese Parameter dann von dem Zugriffsserver 16 an den Portalserver 14 übergeben, welcher die Bild- oder Videodaten aufgrund des Empfangs der Parameter in der anhand der Parameter festgelegten Weise zugänglich macht.

Bei einer weiteren beispielhaften Ausführungsform handelt es sich bei dem Portal um ein Chat-Portal, über das Nutzer Chatnachrichten austauschen können. Die Chatnachrichten können dabei an einen einzigen festgelegten Nutzer adressiert werden, Ferner kann das Chat-Portal auch eine Funktion zur Verfügung stellen, bei der eine Chat-Nachricht gleichzeitig an mehrere Nutzer einer festgelegten Nutzergruppe übermittelt wird oder es kann vorgesehen sein, dass ein Nutzer einen Chatraum erzeugen kann, bei dem es sich um eine Webseite handelt, auf die von Mitgliedern einer Nutzergruppe zugegriffen werden kann, die Chat-Nachrichten auf der Webseite publizieren und einsehen können.

Im Rahmen dieser Ausführungsform kann von dem Nutzer eine Textdaten enthaltende SMS- oder MMS-Nachricht an den Zugriffsserver 16 gesendet werden. Von dem Zugriffsserver 16 werden die Textdaten dann in der zuvor beschriebenen Weise in Form einer Chat-Nachricht an den Portalserver 14 übermittelt. Der oder die vorgesehenen Empfänger der Chatnachricht sind innerhalb des dem Mobilfunkteilnehmer zugeordneten Verzeichnisses in der Zugriffsdatenbank 19 gespeichert und werden von dem Zugriffsserver 16 zusammen mit der Chat-Nachricht an den Portalserver 14 übergeben, so dass dieser die Chat-Nachricht an die von dem Mobilfunkteilnehmer vorgesehenen Empfänger weiterleiten kann.

Wenn die Chat-Nachricht in einem Chatraum publiziert werden soll, dann wird in dem in der Zugriffsdatenbank gespeicherten Verzeichnis eine Identifikation des Chatraums gespeichert und von dem Zugriffsserver 16 zusammen mit der Chat-Nachricht an den Portalserver 14 übermittelt, so dass die Chat-Nachricht in dem Chatraum publiziert wird. Hierbei kann es auch vorgesehen sein, dass der Chatraum beim Erhalt der Chat-Nachricht von dem Portalserver 14 erzeugt wird. Dies kann entweder dann geschehen, wenn der Chatraum bei Erhalt der Chat-Nachricht noch nicht besteht, oder von dem Zugriffsserver 16 ein in dem Verzeichnis der Zugriffsdatenbank 19 als Parameter hinterlegter Befehl zur Erzeugung des Chat-Raums an den Portalserver 14 übergeben wurde.

Um Chat-Nachrichten an unterschiedliche Nutzer oder Nutzergruppen senden zu können, können mehrere Verzeichnisse innerhalb der Zugriffsdatenbank 19 gespeichert werden, wobei jedem Verzeichnis eine MSISDN zugeordnet ist, und die Verzeichnisse die Angabe unterschiedliche Nutzer oder Nutzergruppen in Form von Parametern enthalten. Durch die Wahl der MSISDN, die für den Aufbau der Kommunikationsverbindung von dem Endgerät 12 des Mobilfunkteilnehmers zu dem Zugriffsserver 16 verwendet wird, kann der Mobilfunkteilnehmer somit die Empfänger der Chat-Nachricht bestimmen.

Um dem Mobilfunktellnehmer die MSISDN bereitzustellen, die den Zugangsdaten und gegebenenfalls den Parametern für den Zugriff auf den Portalserver 14 innerhalb der Zugriffsdatenbank 19 zugeordnet ist, wird diese von dem Zugriffsserver 16 zusammen mit einer Bezeichnung des Gommunity-Portals an das Endgerät 12 des Mobilfunknutzers gesendet.

Wenn für ein Community-Portal mehrere Zugriffsmöglichkeiten bestehen, was beispielsweise der Fall ist, wenn bezüglich eines Community-Portals mehrere unterschiedliche Empfänger oder Empfängergruppen von Chat-Nachrichten vorgesehen sind, dann wird die Zugriffsmöglichkeit ebenfalls anhand der Bezeichnung kenntlich gemacht. Zur Übermittelung an das Endgerät 12 werden die MSISDN und die Bezeichnung in ein Dokument eingebracht, in dem ein Namensfeld und ein Rufnummernfeld vorgesehen sind. Die Bezeichnung wird dabei in dem Namensfeld gespeichert und die MSISDN in dem Rufnummernfeld. Vorzugsweise ist das Dokument in einem zur Übertragung von Kontaktdaten vorgesehenen Standardformat ausgeführt, beispielsweise in dem bekannten vCard-Format.

Von dem Zugriffsserver 16 wird das Dokument beispielsweise mittels einer SMS-Nachricht an das Endgerät 12 des Mobilfunkteilnehmers gesendet. Wenn über den paketvermittelnden Teil des Mobilfunknetzwerks 2 eine Kommunikationsverbindung zwischen dem IP-Netzwerk 4 und dem Endgerät 12 besteht, dann kann das Dokument auch über eine paketvermittelnde Verbindung an das Endgerät 12 übermittelt werden. Die Übermittelung der Dokumente über die paketvermittelnde Verbindung erfolgt anhand eines auf dem IP aufsetzenden Protokolls, wie beispielsweise des Hypertext Transfer Protocols (HTTP), des User Datagram Protocols (UDP) oder des Transmission Control Protocol (TCP). Gleichfalls kann es auch vorgesehen sein, dass der Zugriffsserver 16 zunächst prüft, ob über den paketvermittelnden Teil des Mobilfunknetzwerks 2 eine Verbindung zu dem Endgerät 12 besteht, und das Dokument über diese Verbindung an das mobile Endgerät 12 sendet, wenn das Bestehen der Verbindung festgestellt wird. Falls das Bestehen einer derartigen Verbindung nicht festgestellt wird, wird eine SMS-Nachricht an das mobile Endgerät 12 gesendet.

Innerhalb des mobilen Endgeräts 12 des Mobilfunknutzers wird das Dokument, empfangen und von mittels des Prozessors des Endgeräts 12 ausgeführten Adressbuchapplikationen ausgewertet. Die Adressbuchapplikation kann über einen bestimmten Port innerhalb des mobilen Endgeräts 12 angesprochen werden, an den die Dokumente von dem Adressserver 17 adressiert werden. Die Adressbuchapplikation ist dazu ausgebildet, den Inhalt des empfangenen Dokuments auszulesen und anhand des Inhalts einen Eintrag in dem Adressbuch des Endgeräts 12 zu erzeugen. Hierbei kann beispielsweise eine J2ME-API vorgesehen werden, die es erlaubt die SMS-Nachrichten aufgrund ihrer Adressierung an die Applikation zu übergeben, ohne dass diese an dem mobilen Endgerät 10 dargestellt werden. Die Speicherung des Eintrags erfolgt beispielsweise über eine Schnittstelle, die der Applikation einen Zugriff auf das Adressbuch gestattet. Beispiele für derartige Schnittstellen sind die "Personal Information Management (PIM) APIs" für die "Java^{™} 2 Platform, Micro Edition" (J2ME), die es erlauben Daten aus externen Quellen in das Adressbuch eines Endgeräts 12 zu importieren.

Die angesprochenen Felder innerhalb des Dokuments entsprechen Feldern, die ebenfalls innerhalb eines Eintrags des Adressbuchs vorgesehen sind. Insbesondere umfasst ein Eintrag des Adressbuchs dabei ein Namensfeld, welches dem in dem Dokument enthaltenen Namensfeld entspricht, und in dem die in dem Dokument enthaltene Bezeichnung von der Adressbuchapplikation gespeichert wird. Ferner umfasst der Adressbucheintrag ein Rufnummernfeld, das dem in dem Dokument enthaltenen Rufnummernfeld entspricht und in dem die MSISDN von der Adressbuchapplikation gespeichert wird.

Nach der Erzeugung des Adressbucheintrags steht der Eintrag für die Verwendung durch den Mobilfunknutzer zur Verfügung. Um eine Kommunikationsverbindung zu dem Zugriffsserver 16 aufzubauen und in dem Community-Portal zu publizierende Nutzdaten an den Zugriffsserver 16 zu senden, wird dabei von dem Mobilfunkteilnehmer die Bezeichnung des Community-Portals in dem Adressbuch identifiziert und ausgewählt, Aufgrund der Auswahl der Bezeichnung wird dann von dem Endgerät 12 eine Anforderung für den Aufbau einer Kommunikationsverbindung in der zuvor beschriebenen Weise unter Verwendung der MSISDN an den Zugriffsserver 16 übermittelt. Gleichfalls kann es selbstverständlich auch vorgesehen sein, dass der Mobilfunkteilnehmer die dem Community-Portal zugeordnete MSISDN direkt an seinem mobilen Endgerät 12 eingibt, um eine Kommunikationsverbindung zu dem Zugriffsserver 16 aufzubauen.

Zur Erstellung eines Zugangsdaten und gegebenenfalls Parameter enthaltenden Verzeichnisses in der Zugriffsdatenbank 19 ist eine Registrierung des Mobilfunkteilnehmers in dem Zugriffsserver 16 vorgesehen. Hierfür stellt der Zugriffsserver vorzugsweise eine beispielsweise als Webseite ausgebildete Schnittstelle zur Verfügung, auf die der Mobilfunkteilnehmer mittels seines Endgeräts 12 oder eines weiteren direkt mit dem IP-Netzwerk 4 verbundenen Endgeräts zugreift. Bei dem letztgenannten Endgerät kann es sich um einen gewöhnlichen Personal Computer (PC) des Mobilfunkteilnehmers handeln, der mit dem IP-Netzwerk verbunden ist und über eine Browsersoftware verfügt, die einen Zugriff auf die Webseite ermöglicht.

Auf der Webseite gibt der Mobilfunkteilnehmer die Netzwerkadresse des Plattform-Servers 14 beispielsweise in Form eines Domainnamens des Community-Portals an. Ferner können dem Nutzer auch mehrere Community-Plattformen zur Auswahl angeboten werden, von denen er eine auswählt. Ferner gibt der Nutzer seine Zugangsdaten an sowie gegebenenfalls die von ihm gewünschten Parameter, mit denen er festlegt, in welcher Weise Nutzdaten publiziert werden sollen. Darüber hinaus wird von dem Nutzer die Teilnehmemummer seines mit dem Mobilfunkrietzwerk 2 verbundenen Endgeräts angegeben.

Nach erfolgter Registrierung über die Schnittstelle erzeugt der Zugriffsserver 16 das Verzeichnis und ordnet die Zugangsdaten dabei einer MSISDN zu, die neben den von dem Mobilfunkteilnehmer angegebenen Daten in dem Verzeichnis gespeichert wird.

Ferner sendet der Zugriffsserver nach der Registrierung die Zuordnung zwischen der Bezeichnung des Community-Portals und der den Zugangsdaten zugeordneten MSISDN in der beschriebenen Weise an das Endgerät 12 des Mobilfunknutzers, so dass dem Mobilfunknutzer die Bezeichnung und der die MSISDN enthaltende Adressbucheintrag kurzzeitig nach der Registrierung zur Verfügung steht. In einer Ausführungsform ist es dabei vorgesehen, dass die zu verwendende Bezeichnung des Community-Portals ebenfalls von dem Mobilfunknutzer bei der Registrierung angegeben wird.

### Bezugszeichenliste:

- 2: Mobilfunknetzwerk
- 4: IP-Netzwerk
- 6: Mobilfunkvermittlungsstelle (MSC),
- 8: Mobilfunkvermittlungsstelle (MSC)
- 9: SGSN
- 10: Heimatregister (HLR)
- 11: Gateway GPRS Support Node (GGSN)
- 12: Endgerät
- 14: Portalserver
- 16.: Zugriffsserver
- 18: Media-Gateway (Netzwerkknoten)
- 19: Zugriffsdatenbank
- 20: Hilfsanwendung

## Patentansprüche

1. Verfahren zum Zugänglichmachen von Nutzdaten über ein in einem IP-Netzwerk (4) zugängliches, durch einen Portalserver (14) bereitgestelltes Netzwerkportal mittels eines mit einem Telefonnetzwerk (2) verbundenen Endgeräts (12) eines Teilnehmers, bei dem
- eine Zuordnung zwischen einer Rufnummer und Zugangsdaten für einen Zugriff auf den Portalserver (14) erzeugt wird,
- unter Verwendung der Rufnummer eine Kommunikationsverbindung von dem Endgerät (12) zu einem innerhalb des IP-Netzwerks (4) mit dem Portalserver (14) verbundenen Zugriffsserver (16) hergestellt wird, wobei anhand der Rufnummer erkannt wird, dass die Kommunikationsverbindung zu dem Zugriffsserver herzustellen ist und
- im Rahmen der Kommunikationsverbindung an den Zugriffsserver (16) übertragene Nutzdaten unter Verwendung der der Rufnummer zugeordneten Zugangsdaten von dem Zugriffsserver (16) an den Portalserver (14) übergeben werden.

2. Verfahren nach Anspruch 1,
**dadurch gekennzeichnet,**
**dass** den Zugangsdaten zusätzlich eine das Endgerät (12) identifizierende Teilnehmernummer zugeordnet wird, wobei der Zugriffsserver (16) die verwendeten Zugangsdaten unter Heranziehung der Teilnehmernummer ermittelt.

3. Verfahren nach Anspruch 1,
**dadurch gekennzeichnet,**
**dass** die Zugangsdaten eine dem Teilnehmer innerhalb des Portalservers (14) zugeordnete Nutzerkennung und ein Authentifizierungsmerkmal des Teilnehmers umfassen.

4. Verfahren nach einem der vorangegangenen Ansprüche,
**dadurch gekennzeichnet,**
**dass** der Rufnummer und/oder der Teilnehmernummer wenigstens ein Steuerungsparameter zum Beeinflussen des Zugänglichmachens der Nutzdaten zugeordnet sind, die von dem Zugriffsserver (16) an den Portalserver (14) übergeben werden.

5. Verfahren nach Anspruch 4,
**dadurch gekennzeichnet,**
**dass** die Nutzdaten vorgegebenen Nutzern des Portals zugänglich gemacht werden, wobei die Nutzer anhand des Steuerparameters zugänglich gemacht werden.

6. Verfahren nach einem der vorangegangenen Ansprüche,
**dadurch gekennzeichnet,**
**dass** die Nutzdaten ausgewählt sind aus der Gruppe umfassend Textdaten, Bilddaten, Audiodaten und Videodaten.

7. Verfahren nach einem der vorangegangenen Ansprüche,
**dadurch gekennzeichnet,**
**dass** Audio- und/oder Videodaten anhand eines im Rahmen der Kommunikationsverbindung aufgebauten Sprach- oder Videoanrufs an den Zugriffsserver (16) übermittelt werden.

8. Verfahren nach einem der vorangegangenen Ansprüche,
**dadurch gekennzeichnet,**
**dass** die Audio- und/oder Videodaten vor der Übergabe an den Portalserver (14) in dem Zugriffsserver (16) aufgezeichnet werden.

9. Verfahren nach einem der vorangegangenen Ansprüche,
**dadurch gekennzeichnet,**
**dass** im Rahmen der Kommunikationsverbindung eine die Nutzdaten enthaltende MMS- oder SMS-Nachricht an den Zugriffsserver (16) übermittelt wird.

10. Verfahren nach einem der vorangegangene Ansprüche,
**dadurch gekennzeichnet,**
**dass** die Nutzdaten von dem Portalserver (14) an wenigstens einen Nutzer des Portals übermittelt werden oder wenigstens einem Nutzer des Portals auf einer von dem Portalserver (14) bereitgestellten Webseite zugänglich gemacht werden.

11. Verfahren nach einem der vorangegangenen Ansprüche,
**dadurch gekennzeichnet,**
**dass** eine Zuordnung zwischen der Rufnummer und einer Bezeichnung des Portals erzeugt und an das Endgerät des Teilnehmers übermittelt wird.

12. Verfahren nach Anspruch 11,
**dadurch gekennzeichnet,**
**dass** aufgrund des Empfangs der Zuordnung in dem Endgerät (12) ein die Bezeichnung und die Rufnummer enthaltender Eintrag in einem Adressbuch des Endgeräts (12) erzeugt wird, wobei aufgrund der Auswahl der Bezeichnung innerhalb des Adressbuchs unter Verwendung der Rufnummer die Kommunikationsverbindung von dem Endgerät (12) zu dem Zugriffsserver (16) hergestellt wird.

13. System zum Zugänglichmachen von Nutzdaten über ein in einem IP-Netzwerk (4) zugängliches, durch einen Portalserver (4) bereitgestelltes Netzwerkportal mittels eines mit einem Telefonnetzwerk (2) verbundenen Endgeräts (12) eines Teilnehmers, umfassend eine Datenbank (19), in der Zuordnung zwischen einer Rufnummer und Zugangsdaten für einen Zugriff auf den Portalserver (14) gespeichert ist, und einen mit dem Portalserver (14) und der Datenbank (19) verbundenen Zugriffsserver (19), wobei unter Verwendung der Rufnummer eine Kommunikationsverbindung von dem Endgerät (12) zu dem Zugriffsserver (16) herstellbar ist, wobei anhand der Rufnummer erkennbar ist, dass die Kommunikationsverbindung zu dem Zugriffsserver herzustellen ist und wobei der Zugriffsserver (16) dazu ausgebildet ist, im Rahmen der Kommunikationsverbindung an den Zugriffsserver (16) übertragene Nutzdaten unter Verwendung der der Rufnummer zugeordneten Zugangsdaten von dem Zugriffsserver (16) an den Portalserver (14) zu übergeben.

## Claims

1. A method for rendering a payload accessible via a network portal that is accessible in an IP network (4) and that is provided by a portal server (14), by means of a terminal device (12) that belongs to a subscriber and that is connected to a telephone network (2), in which method
• an association is generated between a telephone number and access data for access to the portal server (14),
• using the telephone number, a communication connection is established from the terminal device (12) to an access server (16) that is connected to the portal server (14) within the IP network (4), whereby it is recognized on the basis of the telephone number that the communication connection to the access server has to be established, and
• a payload that has been transmitted to the access server (16) within the scope of the communication connection is transferred from the access server (16) to the portal server (14), making use of the access data associated with the telephone number.

2. The method according to claim 1,
**characterized in that**
a subscriber number that identifies the terminal device (12) is additionally associated with the access data, whereby the access server (16) ascertains the employed access data, making use of the subscriber number.

3. The method according to claim 1,
**characterized in that**
the access data comprise a user identifier associated with the subscriber within the portal server (14) as well as an authentication feature of the subscriber.

4. The method according to one of the preceding claims,
**characterized in that**
at least one control parameter that serves to render the payload accessible is associated with the telephone number and/or with the subscriber number, and said payload is transferred from the access server (16) to the portal server (14).

5. The method according to claim 4,
**characterized in that**
the payload is made accessible to prescribed users of the portal, whereby the payload is rendered accessible on the basis of the control parameter.

6. The method according to one of the preceding claims,
**characterized in that**
the payload is selected from the group comprising text data, image data, audio data and video data.

7. The method according to one of the preceding claims,
**characterized in that**
audio and/or video data is transmitted to the access server (16) on the basis of a voice or video call established within the scope of the communication connection.

8. The method according to one of the preceding claims,
**characterized in that**
the audio and/or video data is recorded in the access server (16) before being transferred to the portal server (14).

9. The method according to one of the preceding claims,
**characterized in that**,
within the scope of the communication connection, an MMS or SMS message containing the payload is transmitted to the access server (16).

10. The method according to one of the preceding claims,
**characterized in that**
the payload is transmitted from the portal server (14) to at least one user of the portal or else made accessible to at least one user of the portal on a website provided by the portal server (14).

11. The method according to one of the preceding claims,
**characterized in that**
an association is generated between the telephone number and a designation of the portal and then transmitted to the terminal device of the subscriber.

12. The method according to claim 11,
**characterized in that**,
on the basis of the receipt of the association in the terminal device (12), an entry containing the designation and the telephone number is generated in an address book of the terminal device (12), whereby, on the basis of the selection of the designation within the address book, the communication connection from the terminal device (12) to the access server (16) is established, making use of the telephone number.

13. A system for rendering a payload accessible via a network portal that is accessible in an IP network (4) and that is provided by a portal server (14) by means of a terminal device (12) that belongs to a subscriber and that is connected to a telephone network (2), said system comprising a database (19) in which an association between a telephone number and access data for access to the portal server (14) is stored, and comprising an access server (16) that is connected to the portal server (14) and to the database (19), whereby, using the telephone number, a communication connection can be established from the terminal device (12) to the access server (16), whereby it can be recognized on the basis of the telephone number that the communication connection to the access server has to be established, and whereby the access server (16) is configured to transfer a payload that has been transmitted to the access server (16) within the scope of the communication connection from the access server (16) to the portal server (14), making use of the access data associated with the telephone number.

## Revendications

1. Procédé de mise à disposition, au moyen d'un terminal (12) d'un abonné relié à un réseau téléphonique (2), de données utiles via un portail de réseau accessibles dans un réseau IP (4) et fourni par un serveur de portail (14), selon lequel :
- une mise en correspondance entre un numéro d'appel et des données d'accès pour un accès au serveur de portail (14) est créée,
- une liaison de communication allant du terminal (12) vers un serveur d'accès (16) relié au serveur de portail (14) dans le réseau IP (4) est établie en utilisant le numéro d'appel, le numéro d'appel permettant de reconnaître s'il y a lieu d'établir la liaison de communication vers le serveur d'accès et
- des données utiles transmises au serveur d'accès (16) dans le cadre de la liaison de communication sont transférées du serveur d'accès (16) au serveur de portail (14) en utilisant les données d'accès associées au numéro d'appel.

2. Procédé selon la revendication 1, **caractérisé en ce qu'**est en outre associé, aux données d'accès, un numéro d'abonné identifiant le terminal (12), le serveur d'accès (16) déterminant les données d'accès utilisées en faisant appel au numéro d'abonné.

3. Procédé selon la revendication 1, **caractérisé en ce que** les données d'accès comprennent un identifiant d'utilisateur associé à l'abonné dans le serveur de portail (14) et une caractéristique d'authentification de l'abonné.

4. Procédé selon l'une des revendications précédentes, **caractérisé en ce qu'**est associé au numéro d'appel et/ou au numéro d'abonné au moins un paramètre de commande pour influencer la mise à disposition des données utiles qui sont transférées du serveur d'accès (16) au serveur de portail (14).

5. Procédé selon la revendication 4, **caractérisé en ce que** les données utiles sont rendues accessibles à des utilisateurs donnés du portail, les données utiles étant rendus accessibles à l'aide du paramètre de commande.

6. Procédé selon l'une des revendications précédentes, **caractérisé en ce que** les données utiles sont choisies dans le groupe comprenant des données textuelles, des données de type image, des données audio et des données vidéo.

7. Procédé selon l'une des revendications précédentes, **caractérisé en ce que** les données audio et/ou vidéo sont transmises au serveur d'accès (16) à l'aide d'un appel vocal ou vidéo établi dans le cadre de la liaison de communication.

8. Procédé selon l'une des revendications précédentes, **caractérisé en ce que** les données audio et/ou vidéo sont enregistrées dans le serveur d'accès (16) avant le transfert au serveur de portail (14).

9. Procédé selon l'une des revendications précédentes, **caractérisé en ce que**, dans le cadre de la liaison de communication, un message MMS ou SMS contenant les données utiles est transmis au serveur d'accès (16).

10. Procédé selon l'une des revendications précédentes, **caractérisé en ce que** les données utiles sont transmises du serveur de portail (14) à au moins un utilisateur du portail ou sont rendues accessibles au moins à un utilisateur du portail sur un site Web fourni par le serveur de portail (14).

11. Procédé selon l'une des revendications précédentes, **caractérisé en ce qu'**une mise en correspondance entre le numéro d'appel et une désignation du portail est créée et est transmise au terminal de l'abonné.

12. Procédé selon la revendication 11, **caractérisé en ce qu'**une entrée contenant la désignation et le numéro d'appel est créée dans un annuaire du terminal (12) sur la base de la réception de la mise en correspondance dans le terminal (12), la liaison de communication allant du terminal (12) au serveur d'accès (16) étant établie sur la base du choix de la désignation dans l'annuaire en utilisant le numéro d'appel.

13. Système de mise à disposition, au moyen d'un terminal (12) d'un abonné relié à un réseau téléphonique (2), de données utiles via un portail de réseau accessible dans un réseau IP (4) et fourni par un serveur de portail (4), comprenant une base de données (19) dans laquelle est stockée la mise en correspondance entre un numéro d'appel et des données d'accès pour un accès au serveur de portail (14), et un serveur d'accès (19) relié au serveur de portail (14) et à la base de données (19), une liaison de communication allant du terminal (12) au serveur d'accès (16) pouvant être établie en utilisant le numéro d'appel, le numéro d'appel permettant de pouvoir reconnaître qu'il y a lieu d'établir la liaison de communication vers le serveur d'accès et le serveur d'accès (16) étant conçu pour transférer, du serveur d'accès (16) au serveur de portail (14), en utilisant les données d'accès associées au numéro d'appel, des données utiles transmises au serveur d'accès (16) dans le cadre de la liaison de communication.
